# EUROPEAN PATENT SPECIFICATION

(11) **EP 3 441 275 B1**
(45) Date of publication and mention of the grant of the patent: **12.02.2020**
(21) Application number: 17819358.7
(22) Date of filing: 30.06.2017
(51) Int. Cl.: B60W 50/08, B60W 50/14

(54) **METHOD, DEVICE, VEHICLE, AND STORAGE MEDIUM FOR VEHICLE CONTROL**
VERFAHREN, VORRICHTUNG, FAHRZEUG UND SPEICHERMEDIUM ZUR FAHRZEUGSTEUERUNG
PROCÉDÉ, DISPOSITIF, VÉHICULE ET SUPPORT DE STOCKAGE DE COMMANDE DE VÉHICULE

(30) Priority: 30.06.2016 CN 201610509664
(43) Date of publication of application: 13.02.2019
(73) Proprietor: Ninebot (Beijing) Tech Co., Ltd., Beijing 100192 (CN)
(72) Inventor: ZHAO, Jiankun, Beijing 100192 (CN); CHEN, Zhongyuan, Beijing 100192 (CN); WANG, Ye, Beijing 100192 (CN)
(74) Representative: Regimbeau
(86) International application number: PCT/CN2017/091171
(87) International publication number: WO 2018/001361

(56) References cited:
- WO-A1-2013/087777
- CN-A- 101 778 741
- CN-A- 102 039 821
- CN-A- 103 802 837
- CN-A- 106 143 498
- DE-A1-102011 011 345
- DE-A1-102014 223 902
- US-A1- 2009 105 908
- US-A1- 2014 095 000

## Description

### TECHNICAL FIELD

The present invention relates to a method and device for controlling a vehicle, a vehicle, and a storage medium.

### BACKGROUND

A rideable vehicle (vehicle for short, such as an electric car, a balanced car, a scooter, etc.) applies widely due to a feature thereof such as being of a small volume, of low energy consumption, capable of easing road traffic, highly entertaining, etc.

An existing vehicle is disadvantageous at least for issues as follows.

The vehicle responds to control over the vehicle using various default vehicle parameters. To change such a vehicle parameter, a user has to operate in a vehicle parameter setting mode specific to a vehicle.

In general, only a few buttons are set on a vehicle. Thus, a vehicle parameter thereof is adjusted often by operating a combination of, or by repeated operation on, the few buttons. Such a mode is cumbersome and hard to memorize, failing to support rapid adjustment of a vehicle parameter, impacting efficiency in operating the vehicle.

DE 10 2011 011345 seems to disclose controlling recycling performance of a motor vehicle with a hybrid drive or an electric drive, where a basic value for a recycling torque is predetermined and / or set using at least one first control element; an intermediate value for the recycling torque that deviates from the basic value is set using at least one second control element; after the intermediate value has been set temporarily by an operator, in particular at least for the next sliding phase, the intermediate value is used as the recycling torque, which then is reset as the basic value when a reset condition is met.

WO 2013087777 seems to disclose setting vehicle functions in a vehicle, where several individual functions are associated with several main collective functions, such that several individual functions are set by selecting a main collective function; the main collective functions are selected using an operating device using a menu displayed by a display device; in said menu, buttons associated with the main collective functions are displayed; association of the settings of the individual functions, which are performed when the respective main collective function is activated, is carried out in at least one submenu; at least one intermediate collective function is defined, with which settings of a subset of the individual functions are associated; both a button for selecting the intermediate collective function and the buttons of the menu for selecting the main collective functions are displayed by the display device; if the intermediate collective function is selected, the settings of the individual functions of the subset that are associated with the intermediate collective function are applied to the selected main collective function

DE 10 2014 223902 seems to disclose operating a longitudinal control device of a motor vehicle, by: determining a location of the motor vehicle; detecting environmental data of the motor vehicle; operating the longitudinal control device by means of a set of predetermined parameters and a set of adaptive parameters, where the set of adaptive parameters depend on location and environmental data of the motor vehicle are variable.

### SUMMARY

Embodiments herein provide a method and device for controlling a vehicle, a vehicle, and a storage medium, capable of adjusting a vehicle parameter in a universal efficient mode.

The features of the method and device according to the present invention are defined in the independent claims, and the preferable features according to the present invention are defined in the dependent claims.

With embodiments herein, an adjustable vehicle parameter of a vehicle is displayed in a display in a setting interface. A setting operation input by a user is received via the setting interface. A vehicle parameter of the vehicle is updated based on the setting operation. As long as there is a communication connection between the display and the vehicle, the user may view an adjustable vehicle parameter of the vehicle via the display at any time, and may set a vehicle parameter via the display, such that an experience of riding the vehicle formed by responding to a control instruction based on an adjusted vehicle parameter is adjusted flexibly.

### BRIEF DESCRIPTION OF THE DRAWINGS

FIG. 1 is a diagram of a possible hardware structure of a device for controlling a vehicle according to an embodiment herein.
FIG. 2 is a possible flowchart of a method for controlling a vehicle according to an embodiment herein.
FIG. 3A - FIG. 3C are diagrams of possible displays in a setting interface according to an embodiment herein.
FIG. 4 is a diagram of a possible functional structure of a device for controlling a vehicle according to an embodiment herein.

### DETAILED DESCRIPTION

The present invention is further elaborated below with reference to the drawings and embodiments. Note that an embodiment herein is merely for explaining the present invention, and is not intended to limit the present invention.

A device for controlling a vehicle, which device implements an embodiment herein as follows, is described first as follows. The device for controlling a vehicle may be coupled or connected to the vehicle end (i.e., vehicle) to transmit data, an instruction, etc. For example, the device for controlling a vehicle may be connected to a bus of the vehicle in a wired mode, such as by a universal serial bus, to establish a communication connection. Alternatively, the device for controlling a vehicle may establish a communication connection with the vehicle in a wireless mode, including a short-distance communication mode such as a Blue Tooth (BT) mode, etc.

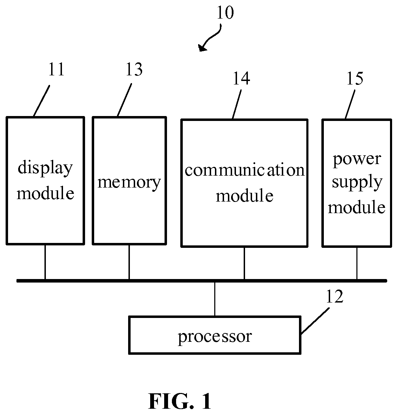

Referring to a diagram of a possible hardware structure of a device 10 for controlling a vehicle as shown in FIG. 1, the device 10 includes a display module, a processor, memory, a communication module, and a power supply module.

The memory 13 may be implemented by volatile or nonvolatile storing equipment of any type, or a combination thereof. For example, nonvolatile memory may be Read Only Memory (ROM), Programmable Read-Only Memory (PROM), Erasable Programmable Read-Only Memory (EPROM), Electrically Erasable Programmable Read-Only Memory (EEPROM), etc.

The memory 13 may be arranged for: storing an Operating System (OS) of a vehicle and a related executable instruction for being run by the processor 12 . The memory 13 may be arranged for storing data of various types to support operation of the device 10 for controlling a vehicle. Such data may include any computer executable program for being operated on the device 10 for controlling a vehicle, such as an OS, an application etc. The OS may contain various system programs, such as a frame layer, a core library layer, a driving layer, etc., for implementing various fundamental services and processing a hardware based task. The application may contain a Media Player, a Browser, etc., for example, for implementing various application services. A method for controlling a vehicle, which method implements an embodiment herein, may be contained in an application or a system program.

The communication module 14 may be arranged for implementing communication with the vehicle (including wired or wireless communication as aforementioned). The communication module 14 may access a wireless network based on a communication standard, such as wireless compatibility authentication (or Wireless-Fidelity, WiFi), 2G, 3G, or a combination thereof, etc. The communication module 14 of a communication component may receive, via a broadcast channel, broadcast related information or a broadcast signal sent by an external broadcast managing system. The communication module 14 may further include a Near Field Communication (NFC) module to facilitate short-range communication. For example, the NFC module may be implemented based on Radio Frequency IDentification (RFID). Infrared Data Association (IrDA), Ultra WideBand (UWB), BT, or other technology.

The power supply module 15 may be arranged for: providing another module in the first device 10 with working power. In an actual application, the device for controlling a vehicle may not be provided with the power supply module 15. The device for controlling a vehicle may acquire electric energy from a power supply of the vehicle by being coupled to the vehicle.

In an actual application, a device for controlling a vehicle may further be provided with a display module 11. The display module may be arranged for displaying various information during running the device for controlling a vehicle and information on running the vehicle. The display module 11 may include a Liquid Crystal Display (LCD), a Touch Panel (TP), etc. If a screen includes a TP, the display module 11 may be implemented by a touch screen, to receive an input signal sent by a user. The TP may include one or more touch sensors, to sense touch, slide, a gesture on the TP, etc. A touch sensor may sense not only a boundary of a touch or slide operation, but also a duration and a pressure related to the touch or slide operation.

A module as shown in FIG. 1 according to an embodiment herein is not limited to any specific form of implementation. For example, the display module 11 may be implemented as an LCD, organic Light Emitting Diode display (LED). The memory 13 may be Flash memory, ROM, etc. The communication module 14 may be implemented as a BT module, a ZigBee communication module, etc. The power supply module 15 may use a Li-polymer battery, a Ni-MH battery, etc. The processor 12 may be implemented using a Central Processing Unit (CPU), a Micro Control Unit (MCU), an Application Specific Integrated Circuit (ASIC) or a logic Field - Programmable Gate Array (FPGA).

Note that a module in a device for controlling a vehicle as shown in FIG. 1 may not be required according to an embodiment as follows. Part or all of the hardware structure as shown in FIG. 1 may be implemented according to a function implemented by a device for controlling a vehicle according to an embodiment as follows.

A method for controlling a vehicle according to an embodiment herein may be described based on a device for controlling a vehicle as shown in FIG. 1.

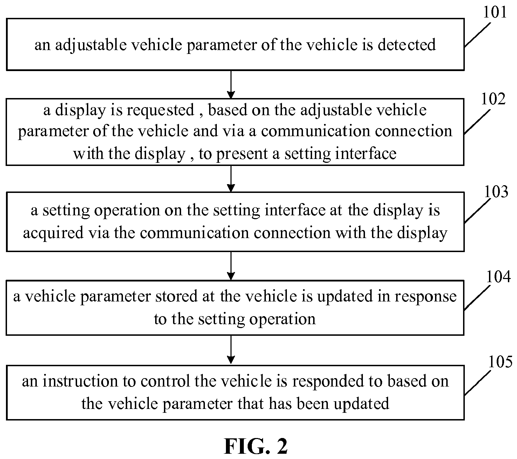

Referring to a possible flowchart of a method for controlling a vehicle as shown in FIG. 2, the method may include an option as follows.

In option 101, an adjustable vehicle parameter of the vehicle is detected.

In detecting a vehicle parameter, having detected that the vehicle has been started, a device for controlling a vehicle may send a request for a vehicle parameter to the vehicle via a communication connection with the vehicle. A vehicle according to an embodiment herein is referred to as with respect to a device end for controlling a vehicle and a display. The vehicle may perform self-test. The vehicle may send an adjustable vehicle parameter of the vehicle to the device for controlling a vehicle. Of course, the vehicle may also be arranged for: after being started, taking initiative and sending an adjustable vehicle parameter to the device for controlling a vehicle.

For example, an adjustable parameter of a vehicle may relate to firmware run at the vehicle. Firmware run at a vehicle may be a driving layer between an OS of the vehicle and hardware of the vehicle, including a driver (program) provided to the OS for controlling the hardware. Having detected the adjustable vehicle parameter of the vehicle, the device for controlling a vehicle may stop detection until an update to the firmware of the vehicle is detected, and then again detect the adjustable vehicle parameter of the vehicle, thereby reducing a number of communications between the device for controlling a vehicle and the vehicle as well as a number of self-tests of the vehicle, thus reducing electric energy consumption by the vehicle.

Vehicle parameters of different types may be described as follows.

For example, a vehicle parameter may be a parameter of any type for reflecting a distinct aspect of performance of a vehicle, including such as one as follows.
1) A braking coefficient, such as a coefficient of friction of a brake pad in a vehicle, may reflect braking performance of the vehicle. The greater a parameter value of the braking coefficient is, the more sensitive the vehicle may be to a braking operation during braking.
2) An acceleration may reflect acceleration performance of a vehicle. The greater a parameter value of the acceleration is, the more the amount by which the vehicle may speed up per unit time.
3) A speed limiting parameter may reflect a maximal driving speed of a vehicle. The greater a parameter value of the speed limiting parameter is, the less the maximal driving speed of the vehicle.
4) An electric energy recycling proportion may reflect electric energy recycling performance of a vehicle in recycling electric energy. The electric energy recycling proportion may refer to a proportion an electromagnetic coil in an electric motor of the vehicle is on. Electric energy recycling may refer to driving rotation of a rotor of the electric motor by the vehicle during driving, such that the electric motor generates electric energy and charges a power supply unit in the vehicle.
5) A damping coefficient may reflect shock absorbing performance of the vehicle. The greater a parameter value of the damping coefficient is, the greater a parameter value of cancellation of shocks (or vibrations, such as those of the vehicle caused by impact of a road surface) by a shock absorber in the vehicle, and the stabler the riding.
6) A maximal brightness may reflect a maximal strength with which a headlight of the vehicle shines.

In option 102, a display is requested, based on the adjustable vehicle parameter of the vehicle and via a communication connection with the display, to present a setting interface.

For example, the display may be mobile User Equipment (UE), i.e., terminal, such as a smart phone, a tablet computer, etc. The display may also be a display module of the vehicle per se. In general, a viewable area of the display module of the vehicle per se may be too small for displaying details of various vehicle parameters. An embodiment herein is to be described below taking mobile UE as the display, for example.

To present a setting interface, a device for controlling a vehicle may establish a communication connection, such as a BT communication connection, with a display. The device for controlling a vehicle may transmit an adjustable vehicle parameter and a parameter value of the vehicle parameter to the display via the communication connection. The device for controlling a vehicle may control the display to present, in a setting interface, the adjustable vehicle parameter and the parameter value of the adjustable vehicle parameter, both as received by the display. Or, the device for controlling a vehicle may also establish with the display a short-distance communication connection of another type. Of course, the device for controlling a vehicle may also establish with the display a communication connection based on a cellular network, such that a user of the display may view the setting interface for setting a vehicle parameter from anywhere. For example, data may be sent by a communication connection in a serial mode. For example, data on a vehicle parameter may be transmitted bit by bit by a communication connection. Each bit of data may occupy a fixed duration. Only a few communication connections may be required for data transmission between the device for controlling a vehicle and the display.

Once a device for controlling a vehicle has transmitted, to a display, an adjustable vehicle parameter of the vehicle for being displayed in a setting interface, to connect later with the same display, the device for controlling a vehicle may skip the option of transmitting a vehicle parameter to the display, and instruct the vehicle to display the previously received vehicle parameter on the setting interface, until detecting an update to the adjustable vehicle parameter of the vehicle. Then, the device for controlling a vehicle may transmit an updated vehicle parameter to the display, such that the display displays the setting interface based on the updated vehicle parameter. Vehicle parameter transmission is not required each time a communication connection is established with the display, thereby increasing a loading speed at which the display loads the setting interface.

In an actual application, a client application for communicating with a vehicle may be run in mobile UE. A client application may be arranged for displaying, in the client application, a setting interface according to an adjustable vehicle parameter transmitted by a vehicle.

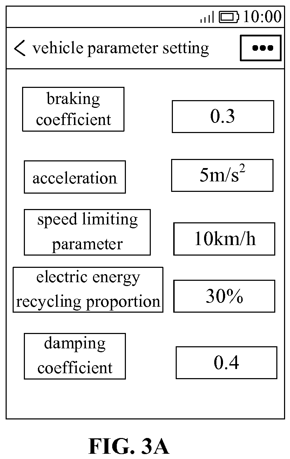

As an example of a setting interface, FIG. 3A shows a possible diagram of a setting interface a display is to display as requested by a device for controlling a vehicle based on a vehicle parameter, with the display being mobile UE . As shown in FIG. 3A, the setting interface may include an aforementioned parameter of any type for reflecting a distinct aspect of performance of the vehicle and a parameter value thereof. The parameter value of the parameter in the setting interface may be in an adjustable state.

In an actual application, at least part of vehicle parameters of the vehicle may be locked, i.e., in a locked state. For example, given consideration such as driving safety, a parameter value of a vehicle parameter locked in a riding state of a vehicle may not be changed when the vehicle is being driven. That is, a locked vehicle parameter may be a parameter which may impact riding safety and thus a parameter value thereof may not be adjusted during riding.

A locking state of a vehicle parameter may be set by a user. For example, an owner of a vehicle may own a permission to manage an OS of the vehicle. Having been connected to the vehicle by the display, the owner of the vehicle may acquire the permission to manage the vehicle by being authenticated as a manager of the vehicle, and thereby may set a vehicle parameter to be locked when it is desired that the vehicle parameter is not to be changed in case the vehicle is used by another user.

To present a vehicle parameter and a parameter value thereof in a setting interface, if a device for controlling a vehicle detects that vehicle parameters of the vehicle include a locked vehicle parameter, the device for controlling a vehicle may control the display to present, in the setting interface, the locked vehicle parameter and an unlocked vehicle parameter, as well as a parameter value of the locked vehicle parameter and a parameter value of the unlocked vehicle parameter. The parameter value of the locked vehicle parameter may be nonadjustable. An unlocked vehicle parameter may be adjusted by a setting operation. For example, in a setting interface, a locked vehicle parameter may be displayed distinct from an unlocked vehicle parameter, to prompt that it is nonadjustable.

To present a vehicle parameter and a parameter value thereof in a setting interface, if a device for controlling a vehicle detects that vehicle parameters of the vehicle include a locked vehicle parameter, the device for controlling a vehicle may control the display to present, in the setting interface, both the locked vehicle parameter and the unlocked vehicle parameter (and parameter values thereof) as adjustable.

To present a setting interface, a device for controlling a vehicle may determine adjustable vehicle modes of the vehicle based on the adjustable vehicle parameter of the vehicle. Each of the adjustable vehicle modes may correspond to at least one of the adjustable vehicle parameter and a parameter value of the at least one of the adjustable vehicle parameter.

As mentioned, a vehicle parameter may be a parameter of any type for reflecting a distinct aspect of performance of a vehicle. Distinct or different vehicle modes may be formed based on different parameter values of vehicle parameters of one type. For example, a vehicle mode corresponding to a parameter value in a value space (or different values) of a vehicle parameter of a type may be determined based on a type of the adjustable vehicle parameter and a range of parameter values allowed for the adjustable vehicle parameter.

A vehicle mode may correspond to a type of vehicle parameters. Different types of vehicle mode may include a braking mode, a speed limiting mode, an acceleration mode, etc., described as follows with reference to examples.

A braking coefficient may reflect braking performance of a vehicle. Thus, a quick braking mode and a slow braking mode corresponding to different parameter values of the braking coefficient may form. A quick braking mode may correspond to a braking coefficient greater than a braking coefficient to which a slow braking mode corresponds.

A maximal speed limit may reflect a maximal driving speed of a vehicle (such as maximal power output by a motor of the vehicle). Thus, different speed limiting modes such as an unlimited speed mode, an intermediate speed limiting mode, etc., corresponding to different parameter values of the maximal speed limit, may form. An unlimited speed mode may correspond to a maximal speed for safety driving as supported by the vehicle. An intermediate speed limiting mode may correspond to a maximal speed limit less than the maximal speed for safety driving, such as of 60% of the maximal speed for safety driving.

An acceleration may reflect acceleration performance of a motor of a vehicle. Thus, different acceleration modes, such as a high acceleration mode, a low acceleration mode, etc., of the vehicle corresponding to different parameter values of the acceleration may form. A high acceleration mode may correspond to an acceleration greater than an acceleration to which a low acceleration mode corresponds.

A damping coefficient may reflect shock absorbing performance of a shock absorber of a vehicle. Thus, a high-level shock absorbing mode and a low-level shock absorbing mode corresponding to different parameter values of the damping coefficient may form. A high-level shock absorbing mode may correspond to a damping coefficient greater than a damping coefficient to which a low-level shock absorbing mode corresponds.

An electric energy recycling proportion may reflect electric energy recycling performance of a vehicle. Thus, a high-efficiency electric energy recycling mode and a low-efficiency electric energy recycling mode corresponding to different parameter values of the electric energy recycling proportion may form. A high-efficiency electric energy recycling mode may correspond to an electric energy recycling proportion greater than an electric energy recycling proportion to which a low-efficiency electric energy recycling mode corresponds.

One vehicle mode may correspond to vehicle parameters of two or more types, as described exemplarily as follows.

A safety mode may be directed at a user with a high requirement for riding safety. A safety mode may use a braking coefficient corresponding to a slow braking mode, an acceleration corresponding to the slow braking mode, a maximal speed limit corresponding to an intermediate speed limiting mode, and a damping coefficient corresponding to a high-level shock absorbing mode as aforementioned, etc.

A player mode may use a braking coefficient corresponding to a quick braking mode, an acceleration corresponding to a high acceleration mode, a maximal speed limit corresponding to an unlimited speed mode, and a damping coefficient corresponding to a low-level shock absorbing mode as aforementioned, etc.

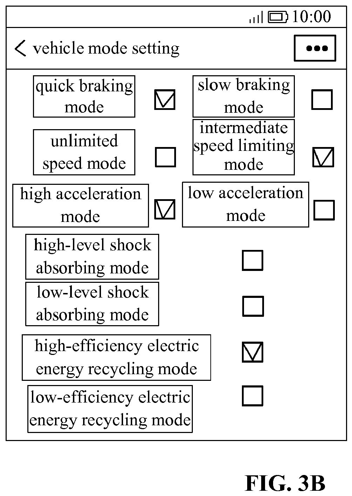

As an example of a setting interface, FIG. 3B shows a possible diagram of a setting interface a display is to display as requested by a device for controlling a vehicle based on a vehicle parameter, with the display being mobile UE . As shown in FIG. 3B, the setting interface may include vehicle modes of different types as aforementioned from which a user may select a vehicle mode, such as a slow braking mode and a quick braking mode that correspond to the braking coefficient, an intermediate speed limiting mode and an unlimited speed mode that correspond to the maximal speed limit, a low acceleration mode and a high acceleration mode that correspond to the acceleration, a low-level shock absorbing mode and a high-level shock absorbing mode that correspond to the damping coefficient, etc.

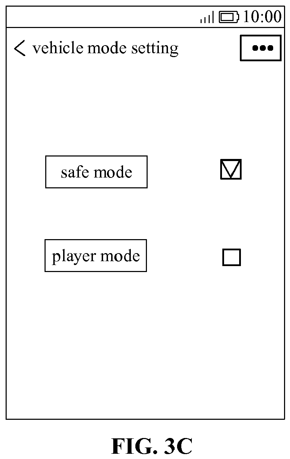

As an example of a setting interface, FIG. 3C shows a setting interface which may display a vehicle mode corresponding to multiple vehicle parameters, such as a safety mode, a player mode, etc.

Multiple vehicle modes displayed by a setting interface may be selected as long as no conflict results from parameter values of vehicle parameters corresponding to the vehicle modes. Alternatively, only one of vehicle modes displayed by a setting interface may be selected.

In option 103, a setting operation on the setting interface at the display is acquired via the communication connection with the display.

For example, a setting operation performed by a user on a vehicle parameter in any setting interface as shown in FIG. 2, FIG. 3A - FIG. 3D may be monitored via the communication connection with the display. A setting operation may be a voice setting operation for setting a vehicle parameter in a setting interface . A setting operation may be a touch operation on a vehicle parameter in a setting interface.

In option 104, a vehicle parameter stored at the vehicle is updated in response to the setting operation.

When acquiring an adjustable vehicle parameter of a vehicle, if a device for controlling a vehicle detects that vehicle parameters of the vehicle include an unlocked vehicle parameter, the device for controlling a vehicle may display both a locked vehicle parameter and a parameter value thereof as nonadjustable, and display the unlocked vehicle parameter as adjustable. In response to receiving a setting operation setting the unlocked vehicle parameter, the device for controlling a vehicle may update a parameter value of a target vehicle parameter, i.e., the unlocked vehicle parameter, set by the setting operation.

When acquiring an adjustable vehicle parameter of a vehicle, if a device for controlling a vehicle detects that vehicle parameters of the vehicle include an unlocked vehicle parameter, the device for controlling a vehicle may display the unlocked vehicle parameter, a locked vehicle parameter, and parameter values thereof as adjustable, as follows.
1) In response to receiving a setting operation setting the unlocked vehicle parameter, the device for controlling a vehicle may update a parameter value of a target vehicle parameter set by the setting operation.
2) In response to receiving a setting operation setting a locked vehicle parameter, the device for controlling a vehicle may determine a parameter value (stored at the device for controlling a vehicle, for example) of a target vehicle parameter set by the setting operation. When the locked vehicle parameter is switched to the unlocked state, such as when being adjusted to the unlocked state by an owner of a vehicle, or when the vehicle automatically adjusts any locked vehicle parameter to the unlocked state when the vehicle is not in a riding state (such as when being under remote control), the device for controlling a vehicle may update a parameter value of the target vehicle parameter stored at the vehicle corresponding to the parameter value set by the setting operation for the target vehicle parameter which used to be locked.

For example, when vehicle parameters and parameter values of the vehicle parameters as shown exemplarily in FIG. 3A are displayed in a setting interface, a device for controlling a vehicle may monitor, via a communication connection, a setting operation received by a display, determine a (new) parameter value set by the setting operation for a target vehicle parameter, and trigger update, by a vehicle, of a parameter value of the target vehicle parameter stored at the vehicle corresponding to the parameter value set by the setting operation by sending the parameter value set by the setting operation for the target vehicle parameter to the vehicle.

For example, when vehicle modes as shown exemplarily in FIG. 3B or FIG. 3C are displayed in a setting interface, a device for controlling a vehicle may monitor, via a communication connection, a setting operation received by a display, detect a target vehicle mode selected by the setting operation from the vehicle modes, and trigger update, by a vehicle, of a parameter value of a target vehicle parameter stored at the vehicle corresponding to at least one vehicle parameter corresponding to the target vehicle mode and a parameter value of the at least one vehicle parameter, by sending the at least one vehicle parameter corresponding to the target vehicle mode and the parameter value of the at least one vehicle parameter to the vehicle.

To meet a personalized need of a user for a vehicle mode, besides vehicle modes as shown exemplarily in FIG. 3B and FIG. 3C , a device for controlling a vehicle may allow the user to select at least one target vehicle parameter and set a parameter value thereof to form a customized vehicle mode by combination.

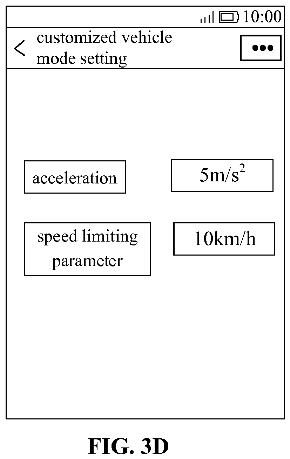

For example, to allow a user to set a vehicle mode flexibly, the user may be allowed to form, via a setting operation, a customized vehicle mode with a parameter value of at least one vehicle parameter from vehicle parameters and parameter values of the vehicle parameters as shown exemplarily in FIG. 3A. For example, a customized mode with an acceleration of 2 m/s² (meters per square second) and a maximal speed limit of 30 km/h (kilometers per hour) may be formed. For example, a setting operation corresponding to a customized vehicle mode as shown in FIG. 3D may be implemented. A device for controlling a vehicle may acquire a target vehicle parameter (including an acceleration and a speed limiting parameter as shown in FIG. 3D, for example) and a parameter value thereof as adjusted by the setting operation. In response to the setting operation, the device for controlling a vehicle may store the set target vehicle parameter and the parameter value thereof into a vehicle as the customized (new) vehicle mode.

In option 105, an instruction to control the vehicle is responded to based on the vehicle parameter that has been updated.

When a target vehicle parameter is relevant to an instruction to control a vehicle received by the vehicle, the instruction to control the vehicle may be responded to based on an updated parameter value of the target vehicle parameter, forming different experiences of riding the vehicle, as described exemplarily as follows.

An instruction to control a vehicle may be responded to based on a vehicle parameter that has been updated as follows.
1) When a target vehicle parameter of a braking coefficient is updated, such as when receiving a braking control instruction generated by a trigger of a braking crank, a brake pad in a vehicle may be controlled to perform braking based on an updated parameter value of the braking coefficient, thereby altering braking performance of the vehicle, i.e., altering an experience of riding the vehicle under brake.
2) When a target vehicle parameter of an acceleration is updated, such as when receiving an acceleration control instruction generated by a trigger of an accelerator, a motor in a vehicle may be controlled to output power to accelerate based on an updated parameter value of the acceleration, thereby altering acceleration performance of the vehicle per unit time, i.e., altering an experience of riding the accelerating vehicle.
3) When a target vehicle parameter of a speed limiting parameter is updated, such as when receiving a maximal speed control instruction generated by keeping an accelerator at a maximal degree, a motor may be controlled to output maximal power based on an updated speed limiting parameter, thereby altering an experience of riding a vehicle at a maximal driving speed . A rider may experience different maximal driving speeds of a vehicle when different parameter values of a speed limiting parameter are set.
4) When a target vehicle parameter of a damping coefficient is updated, such as when receiving a control instruction generated by starting an accelerator, the damping coefficient of a shock absorber may be controlled to cancel impact from a road surface during riding based on an updated speed limiting parameter, thereby altering a degree of comfort a user experiences while riding a vehicle.
5) When a target vehicle parameter of an electric energy recycling proportion is updated, such as when a state of a vehicle after responding to an instruction to control the vehicle meets a preset condition, energy may be recycled according to the electric energy recycling proportion. For example, the preset condition may be that an accelerator of the vehicle is in a released state. In this case, the riding may often be about to stop, the vehicle may often be driven downhill, etc., and electric energy recycling will have no impact on the driving of the vehicle. For example, the preset condition may be that electric energy of a power supply in the vehicle is low (i.e., lower than a preset low level). To avoid any impact on running of an OS of the vehicle caused by the electric energy of the power supply being overly low, electric energy may keep being recycled according to the electric energy recycling proportion as long as the vehicle is running, until electric energy of the power supply has gone back to normal (i.e., is more than a preset normal level).

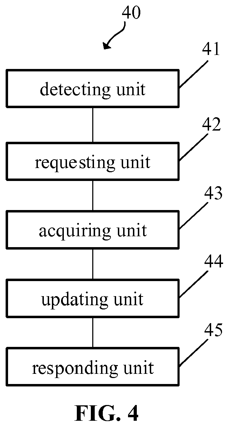

A functional structure of a device for controlling a vehicle as aforementioned is to be described. A functional structure of a device for controlling a vehicle as shown in FIG. 4 is but a division of the device for controlling a vehicle at a level of logic functions. Functional modules in a device for controlling a vehicle as shown in FIG. 4 may be divided into more modules, or combined to form less modules.

Referring to a diagram of a possible functional structure of a device 40 for controlling a vehicle as shown in FIG. 4, the device for controlling a vehicle may include a module as follows.

A detecting unit 41 is arranged for: detecting an adjustable vehicle parameter of the vehicle.

A requesting unit 42 is arranged for: requesting, based on the adjustable vehicle parameter of the vehicle and via a communication connection with a display, the display to present a setting interface.

An acquiring unit 43 is arranged for: acquiring, via the communication connection with the display, a setting operation on the setting interface at the display.

An updating unit 44 is arranged for: in response to the setting operation, updating a vehicle parameter stored at the vehicle.

A responding unit 45 is arranged for: responding to, based on the vehicle parameter that has been updated, an instruction to control the vehicle.

The requesting unit 42 may be arranged for: transmitting, to the display via the communication connection, the adjustable vehicle parameter and a parameter value of the adjustable vehicle parameter.

The requesting unit may be arranged for: controlling the display to present, in the setting interface, the adjustable vehicle parameter and the parameter value of the adjustable vehicle parameter, both as received by the display.

The responding unit 45 may be arranged for: updating a parameter value of a target vehicle parameter stored at the vehicle corresponding to a parameter value set by the setting operation for the target vehicle parameter.

The requesting unit 42 may be arranged for: in response to detecting vehicle parameters of the vehicle including a locked vehicle parameter, controlling the display to present, in the setting interface, the locked vehicle parameter and an unlocked vehicle parameter, as well as a parameter value of the locked vehicle parameter and a parameter value of the unlocked vehicle parameter. The parameter value of the locked vehicle parameter may be nonadjustable.

The updating unit 44 may be arranged for: in response to detecting vehicle parameters of the vehicle including a locked vehicle parameter, updating the parameter value of the target vehicle parameter stored at the vehicle corresponding to the parameter value set by the setting operation for the target vehicle parameter in an unlocked state. The updating unit may be arranged for: in response to the locked vehicle parameter being switched to the unlocked state, updating the parameter value of the target vehicle parameter stored at the vehicle corresponding to the parameter value set by the setting operation for the target vehicle parameter which used to be locked.

The requesting unit 42 may be arranged for: determining adjustable vehicle modes of the vehicle based on the adjustable vehicle parameter of the vehicle. Each vehicle mode may correspond to at least one vehicle parameter and a parameter value thereof. The requesting unit may be arranged for: transmitting, to the display via the communication connection, the adjustable vehicle modes; and controlling the display to present, in the setting interface, the adjustable vehicle modes as received by the display.

The updating unit 44 may be arranged for: detecting a target vehicle mode selected by the setting operation from the adjustable vehicle modes; and updating, based on at least one of the adjustable vehicle parameter and a parameter value of the at least one of the adjustable vehicle parameter corresponding to the target vehicle mode, a parameter value of a corresponding vehicle parameter stored at the vehicle.

The requesting unit 42 may be arranged for: determining, based on a type of the adjustable vehicle parameter and a range of parameter values allowed for the adjustable vehicle parameter, a vehicle mode corresponding to a parameter value of a vehicle parameter of a type in a value space.

The adjustable vehicle parameter of the vehicle may include an electric energy recycling proportion of the vehicle. The responding unit 45 may be arranged for: in response to a state of the vehicle after responding to the instruction to control the vehicle meeting a preset condition, recycling energy according to the electric energy recycling proportion.

An embodiment herein may provide a vehicle. A vehicle according to an embodiment herein may be implemented in various modes, such as an electric automatic vehicle (including a two-wheel structure, a three-wheel structure, etc.), a balanced car (including a single-wheel structure, a two-wheel structure, a structure of more wheels, etc.), a scooter, etc. In general, a power device in the vehicle may provide driving power using electric energy, and / or other energy.

A vehicle according to an embodiment herein may incorporate therein a device for controlling a vehicle according to an aforementioned embodiment . The vehicle may have a built-in communication module (such as a BT module). Signal coupling with the device for controlling a vehicle may be implemented by the communication module. Coupling with the device for controlling a vehicle may be implemented by an interface in a specific form, such as a Universal Serial Bus (USB) interface.

An embodiment herein may provide a storage medium storing therein a computer executable program. The computer executable program is for being run to execute a method for controlling a vehicle as follows.

An adjustable vehicle parameter of the vehicle is detected.

A display is requested, based on the adjustable vehicle parameter of the vehicle and via a communication connection with the display, to present a setting interface.

A setting operation on the setting interface at the display is acquired via the communication connection with the display.

A vehicle parameter stored at the vehicle is updated in response to the setting operation.

An instruction to control the vehicle is responded to based on the vehicle parameter that has been updated.

The computer executable program may be executed for an operation as follows.

The adjustable vehicle parameter and a parameter value of the adjustable vehicle parameter may be transmitted to the display via the communication connection.

The display may be controlled to present, in the setting interface, the adjustable vehicle parameter and the parameter value of the adjustable vehicle parameter, both as received by the display.

A vehicle parameter stored at the vehicle may be updated in response to the setting operation as follows.

A parameter value of a target vehicle parameter stored at the vehicle may be updated corresponding to a parameter value set by the setting operation for the target vehicle parameter.

The computer executable program may be executed for an operation as follows.

The display may be controlled to present, in the setting interface, the adjustable vehicle parameter and the parameter value of the adjustable vehicle parameter, both as received by the display as follows.

When it is detected that vehicle parameters of the vehicle include a locked vehicle parameter, the display may be controlled to present, in the setting interface, the locked vehicle parameter and an unlocked vehicle parameter, as well as a parameter value of the locked vehicle parameter and a parameter value of the unlocked vehicle parameter.

The parameter value of the locked vehicle parameter may be nonadjustable.

The computer executable program may be executed for an operation as follows.

When it is detected that vehicle parameters of the vehicle include a locked vehicle parameter, the parameter value of the target vehicle parameter stored at the vehicle may be updated corresponding to the parameter value set by the setting operation for the target vehicle parameter in an unlocked state.

When the locked vehicle parameter is switched to the unlocked state, the parameter value of the target vehicle parameter stored at the vehicle may be updated corresponding to the parameter value set by the setting operation for the target vehicle parameter which used to be locked.

The computer executable program may be executed for an operation as follows.

Adjustable vehicle modes of the vehicle may be determined based on the adjustable vehicle parameter of the vehicle. Each adjustable vehicle mode may correspond to at least one adjustable vehicle parameter and a parameter value thereof.

The adjustable vehicle modes may be transmitted to the display via the communication connection.

The display may be controlled to present, in the setting interface, the adjustable vehicle modes as received by the display.

The vehicle parameter stored at the vehicle may be updated in response to the setting operation as follows.

A target vehicle mode selected by the setting operation from the adjustable vehicle modes may be detected.

A parameter value of a corresponding vehicle parameter stored at the vehicle may be updated based on at least one of the adjustable vehicle parameter and a parameter value of the at least one of the adjustable vehicle parameter corresponding to the target vehicle mode.

The computer executable program may be executed for an operation as follows.

A vehicle mode corresponding to a parameter value of a vehicle parameter of a type in a value space may be determined based on a type of the adjustable vehicle parameter and a range of parameter values allowed for the adjustable vehicle parameter.

The adjustable vehicle parameter of the vehicle may include an electric energy recycling proportion of the vehicle. The computer executable program may be executed for an operation as follows. When a state of the vehicle after responding to the instruction to control the vehicle meets a preset condition, energy may be recycled according to the electric energy recycling proportion.

Those skilled in the art may understand that all or part of the options of the embodiments may be implemented by instructing a related hardware through a program, which program may be stored in a (non-transitory) computer-readable storage medium and when executed, execute options including those of the embodiments. The computer-readable storage medium may be various media that can store program codes, such as mobile storage equipment, Random Access Memory (RAM), Read-Only Memory (ROM), a magnetic disk, a CD, and/or the like.

When implemented in form of a software functional module and sold or used as an independent product, an integrated module herein may also be stored in a (non-transitory) computer-readable storage medium. Based on such an understanding, the essential part or a part contributing to prior art of the technical solution of an embodiment of the present disclosure may appear in form of a software product, which software product is stored in storage media, and includes a number of instructions for allowing computer equipment (such as a personal computer, a server, network equipment, and/or the like) to execute all or part of the methods in various embodiments herein. The storage media include various media that can store program codes, such as mobile storage equipment, RAM, ROM, a magnetic disk, a CD, and/or the like.

The embodiments described are not intended to limit the scope of the invention. Any modification, equivalent replacement, and/or the like made to described embodiments within the technical scope of the present invention, as may occur to those skilled in the art, shall be included in the scope of the present invention. The scope of the invention is determined by the claims.

## Claims

1. A method for controlling a vehicle, comprising:
detecting an adjustable vehicle parameter of the vehicle (101);
requesting, based on the adjustable vehicle parameter of the vehicle and via a communication connection with a display, the display to present a setting interface (102);
acquiring, via the communication connection with the display, a setting operation on the setting interface at the display (103);
in response to the setting operation, updating a vehicle parameter stored at the vehicle (104); and
responding to, based on the vehicle parameter that has been updated, an instruction to control the vehicle (105),
wherein the requesting, based on the adjustable vehicle parameter of the vehicle and via a communication connection with a display, the display to present a setting interface comprises:
transmitting, to the display via the communication connection, the adjustable vehicle parameter and a parameter value of the adjustable vehicle parameter; and
controlling the display to present, in the setting interface, the adjustable vehicle parameter and the parameter value of the adjustable vehicle parameter, both as received by the display,
wherein the in response to the setting operation, updating a vehicle parameter stored at the vehicle comprises:
updating a parameter value of a target vehicle parameter stored at the vehicle corresponding to a parameter value set by the setting operation for the target vehicle parameter,
**characterized in that** the updating a parameter value of a target vehicle parameter stored at the vehicle corresponding to a parameter value set by the setting operation for the target vehicle parameter comprises:
in response to detecting vehicle parameters of the vehicle comprising a locked vehicle parameter, updating the parameter value of the target vehicle parameter stored at the vehicle corresponding to the parameter value set by the setting operation for the target vehicle parameter in an unlocked state; and
in response to the locked vehicle parameter being switched to the unlocked state, updating the parameter value of the target vehicle parameter stored at the vehicle corresponding to the parameter value set by the setting operation for the target vehicle parameter which used to be locked.

2. The method of claim 1, wherein the controlling the display to present, in the setting interface, the adjustable vehicle parameter and the parameter value of the adjustable vehicle parameter, both as received by the display comprises:
in response to detecting the vehicle parameters of the vehicle comprising the locked vehicle parameter, controlling the display to present, in the setting interface, the locked vehicle parameter and an unlocked vehicle parameter, as well as a parameter value of the locked vehicle parameter and a parameter value of the unlocked vehicle parameter,
wherein the parameter value of the locked vehicle parameter is nonadjustable.

3. The method of claim 1,
wherein the requesting, based on the adjustable vehicle parameter of the vehicle and via a communication connection with a display, the display to present a setting interface comprises:
determining adjustable vehicle modes of the vehicle based on the adjustable vehicle parameter of the vehicle, each of the adjustable vehicle modes corresponding to at least one of the adjustable vehicle parameter and a parameter value of the at least one of the adjustable vehicle parameter;
transmitting, to the display via the communication connection, the adjustable vehicle modes; and
controlling the display to present, in the setting interface, the adjustable vehicle modes as received by the display,
wherein the in response to the setting operation, updating a vehicle parameter stored at the vehicle comprises:
detecting a target vehicle mode selected by the setting operation from the adjustable vehicle modes; and
updating, based on at least one of the adjustable vehicle parameter and a parameter value of the at least one of the adjustable vehicle parameter corresponding to the target vehicle mode, a parameter value of a corresponding vehicle parameter stored at the vehicle.

4. The method of claim 3, wherein the determining adjustable vehicle modes of the vehicle based on the adjustable vehicle parameter of the vehicle comprises:
determining, based on a type of the adjustable vehicle parameter and a range of parameter values allowed for the adjustable vehicle parameter, a vehicle mode corresponding to a parameter value of a vehicle parameter of a type in a value space.

5. The method of claim 1,
wherein the adjustable vehicle parameter of the vehicle comprises an electric energy recycling proportion of the vehicle,
wherein the responding to, based on the vehicle parameter that has been updated, an instruction to control the vehicle comprises:
in response to a state of the vehicle after responding to the instruction to control the vehicle meeting a preset condition, recycling energy according to the electric energy recycling proportion.

6. A device (40) for controlling a vehicle, comprising a detecting unit (41), a requesting unit (42), an acquiring unit (43), an updating unit (44), and a responding unit (45),
wherein the detecting unit (41) is arranged for: detecting an adjustable vehicle parameter of the vehicle,
wherein the requesting unit (42) is arranged for: requesting, based on the adjustable vehicle parameter of the vehicle and via a communication connection with a display, the display to present a setting interface,
wherein the acquiring unit (43) is arranged for: acquiring, via the communication connection with the display, a setting operation on the setting interface at the display,
wherein the updating unit (44) is arranged for: in response to the setting operation, updating a vehicle parameter stored at the vehicle,
wherein the responding unit (45) is arranged for: responding to, based on the vehicle parameter that has been updated, an instruction to control the vehicle,
wherein the requesting unit (42) is arranged for:
transmitting, to the display via the communication connection, the adjustable vehicle parameter and a parameter value of the adjustable vehicle parameter; and
controlling the display to present, in the setting interface, the adjustable vehicle parameter and the parameter value of the adjustable vehicle parameter, both as received by the display,
wherein the updating unit (44) is arranged for:
updating a parameter value of a target vehicle parameter stored at the vehicle corresponding to a parameter value set by the setting operation for the target vehicle parameter,
**characterized in that** the updating unit (44) is arranged for: in response to detecting vehicle parameters of the vehicle comprising a locked vehicle parameter, updating the parameter value of the target vehicle parameter stored at the vehicle corresponding to the parameter value set by the setting operation for the target vehicle parameter in an unlocked state,
and **in that** the updating unit (44) is arranged for: in response to the locked vehicle parameter being switched to the unlocked state, updating the parameter value of the target vehicle parameter stored at the vehicle corresponding to the parameter value set by the setting operation for the target vehicle parameter which used to be locked.

7. The device of claim 6, wherein the requesting unit (42) is arranged for:
in response to detecting the vehicle parameters of the vehicle comprising the locked vehicle parameter, controlling the display to present, in the setting interface, the locked vehicle parameter and an unlocked vehicle parameter, as well as a parameter value of the locked vehicle parameter and a parameter value of the unlocked vehicle parameter,
wherein the parameter value of the locked vehicle parameter is nonadjustable.

8. The device of claim 6,
wherein the requesting unit (42) is arranged for:
determining adjustable vehicle modes of the vehicle based on the adjustable vehicle parameter of the vehicle, each of the adjustable vehicle modes corresponding to at least one of the adjustable vehicle parameter and a parameter value of the at least one of the adjustable vehicle parameter;
transmitting, to the display via the communication connection, the adjustable vehicle modes; and
controlling the display to present, in the setting interface, the adjustable vehicle modes as received by the display,
wherein the updating unit (44) is arranged for:
detecting a target vehicle mode selected by the setting operation from the adjustable vehicle modes; and
updating, based on at least one of the adjustable vehicle parameter and a parameter value of the at least one of the adjustable vehicle parameter corresponding to the target vehicle mode, a parameter value of a corresponding vehicle parameter stored at the vehicle.

9. The device of claim 6,
wherein the adjustable vehicle parameter of the vehicle comprises an electric energy recycling proportion of the vehicle,
wherein the responding unit (45) is arranged for:
in response to a state of the vehicle after responding to the instruction to control the vehicle meeting a preset condition, recycling energy according to the electric energy recycling proportion.

10. A vehicle provided with the device of any one of claims 6 to 9.

11. A storage medium, storing therein a computer executable program for being run to execute the method of any one of claims 1 to 5.

## Patentansprüche

1. Verfahren zum Steuern eines Fahrzeugs, Folgendes umfassend:
Detektieren eines anpassbaren Fahrzeugparameters des Fahrzeugs (101);
Auffordern, basierend auf dem anpassbaren Fahrzeugparameter des Fahrzeugs und über eine Kommunikationsverbindung mit einer Anzeige, der Anzeige zum Darstellen einer Einstellungsschnittstelle (102);
Erfassen, über die Kommunikationsverbindung mit der Anzeige, einer Einstellungstätigkeit auf der Einstellungsschnittstelle auf der Anzeige (103);
als Antwort auf die Einstellungstätigkeit, Aktualisieren eines in dem Fahrzeug gespeicherten Fahrzeugparameters (104); und
Antworten, basierend auf dem Fahrzeugparameter, der aktualisiert wurde, auf eine Anweisung zum Steuern des Fahrzeugs (105),
wobei das Auffordern, basierend auf dem anpassbaren Fahrzeugparameter des Fahrzeugs und über eine Kommunikationsverbindung mit einer Anzeige, der Anzeige zum Darstellen einer Einstellungsschnittstelle Folgendes umfasst:
Übertragen, auf die Anzeige über die Kommunikationsverbindung, des anpassbaren Fahrzeugparameters und eines Parameterwerts des anpassbaren Fahrzeugparameters; und
Steuern der Anzeige zum Darstellen, in der Einstellungsschnittstelle, des anpassbaren Fahrzeugparameters und des Parameterwerts des anpassbaren Fahrzeugparameters, beide wie von der Anzeige empfangen,
wobei das Aktualisieren eines in dem Fahrzeug gespeicherten Fahrzeugparameters als Antwort auf die Einstellungstätigkeit Folgendes umfasst:
Aktualisieren eines Parameterwertes eines in dem Fahrzeug gespeicherten Zielfahrzeugparameters entsprechend einem durch die Einstellungstätigkeit eingestellten Parameterwert für den Zielfahrzeugparameter,
**dadurch gekennzeichnet, dass** das Aktualisieren eines Parameterwertes eines in dem Fahrzeug gespeicherten Zielfahrzeugparameters entsprechend einem durch die Einstellungstätigkeit eingestellten Parameterwert für das Zielfahrzeugparameter Folgendes umfasst:
als Antwort auf das Detektieren von Fahrzeugparametern des Fahrzeugs, die einen gesperrten Fahrzeugparameter umfassen, Aktualisieren des Parameterwerts des in dem Fahrzeug gespeicherten Zielfahrzeugparameters entsprechend dem durch die Einstellungstätigkeit eingestellten Parameterwert für den Zielfahrzeugparameter in einem ungesperrten Zustand; und
als Antwort auf den gesperrten Fahrzeugparameter, der auf den ungesperrten Zustand umgeschaltet wird, Aktualisieren des Parameterwerts des in dem Fahrzeug gespeicherten Zielfahrzeugparameters entsprechend dem durch die Einstellungstätigkeit eingestellten Parameterwert für den Zielfahrzeugparameter, der gesperrt war.

2. Verfahren nach Anspruch 1, wobei das Steuern der Anzeige in der Einstellungsschnittstelle zum Darstellen des Fahrzeugparameters und des Parameterwerts des anpassbaren Fahrzeugparameters, beide wie von der Anzeige empfangen, Folgendes umfasst:
als Antwort auf das Detektieren der Fahrzeugparameter, Steuern der Anzeige zum Darstellen in der Einstellungsschnittstelle des gesperrten Fahrzeugparameters und eines ungesperrten Fahrzeugparameters sowie eines Parameterwerts des gesperrten Fahrzeugparameters und eines Parameterwerts des ungesperrten Fahrzeugparameters,
wobei der Parameterwert des gesperrten Fahrzeugparameters nicht anpassbar ist.

3. Verfahren nach Anspruch 1,
wobei das Auffordern, basierend auf dem anpassbaren Fahrzeugparameter des Fahrzeugs und über eine Kommunikationsverbindung mit einer Anzeige, der Anzeige zum Darstellen einer Einstellungsschnittstelle Folgendes umfasst:
Bestimmen von anpassbaren Fahrzeugmodi des Fahrzeugs basierend auf dem anpassbaren Fahrzeugparameter des Fahrzeugs, wobei jeder der anpassbaren Fahrzeugmodi wenigstens einem der anpassbaren Fahrzeugparameter und einem Parameterwert von wenigstens einem der anpassbaren Fahrzeugparameter entspricht;
Übertragen des anpassbaren Fahrzeugmodus auf die Anzeige über die Kommunikationsverbindung; und
Steuern der Anzeige zum Darstellen der anpassbaren Fahrzeugmodi in der Einstellungsschnittstelle wie von der Anzeige empfangen,
wobei das Aktualisieren eines in dem Fahrzeug gespeicherten Fahrzeugparameters als Antwort auf die Einstellungstätigkeit Folgendes umfasst:
Detektieren eines Zielfahrzeugmodus, ausgewählt durch die Einstellungstätigkeit aus den anpassbaren Fahrzeugmodi; und
Aktualisieren basierend auf wenigstens einem der anpassbaren Fahrzeugparameter und einem Parameterwert von dem wenigstens einen der anpassbaren Fahrzeugparameter entsprechend dem Zielfahrzeugmodus, eines Parameterwertes eines entsprechenden in dem Fahrzeug gespeicherten Fahrzeugparameters.

4. Verfahren nach Anspruch 3, wobei das Bestimmen von anpassbaren Fahrzeugmodi des Fahrzeugs basierend auf dem anpassbaren Fahrzeugparameter des Fahrzeugs Folgendes umfasst:
Bestimmen, basierend auf einem Typ des anpassbaren Fahrzeugparameters und einer Reihe von für den anpassbaren Fahrzeugparameter erlaubten Parameterwerten, eines Fahrzeugmodus entsprechend einem Parameterwert eines Fahrzeugparameters eines Typs in einem Wertfeld.

5. Verfahren nach Anspruch 1,
wobei der anpassbare Fahrzeugparameter des Fahrzeugs ein Elektroenergie-Aufbereitungsverhältnis des Fahrzeugs umfasst,
wobei das Beantworten, basierend auf dem Fahrzeugparameter, der aktualisiert wurde, einer Anweisung zum Steuern des Fahrzeugs Folgendes umfasst:
als Antwort auf einen Zustand des Fahrzeugs nach dem Beantworten der Anweisung zum Steuern des Fahrzeugs unter Einhaltung einer vorher eingestellten Bedingung, Aufbereiten von Energie entsprechend dem Elektroenergie-Aufbereitungsverhältnis.

6. Vorrichtung (40) zum Steuern eines Fahrzeugs, umfassend eine Detektionseinheit (41), eine Aufforderungseinheit (42), eine Erfassungseinheit (43), eine Aktualisierungseinheit (44) und eine Beantwortungseinheit (45),
wobei die Detektionseinheit (41) ausgelegt ist zum: Detektieren eines anpassbaren Fahrzeugparameters des Fahrzeugs,
wobei die Aufforderungseinheit (42) ausgelegt ist zum: Auffordern, basierend auf dem anpassbaren Fahrzeugparameter des Fahrzeugs und über eine Kommunikationsverbindung mit einer Anzeige, der Anzeige zum Darstellen einer Einstellungsschnittstelle,
wobei die Erfassungseinheit (43) ausgelegt ist zum: Erfassen, über die Kommunikationsverbindung mit der Anzeige, einer Einstellungstätigkeit auf der Einstellungsschnittstelle auf der Anzeige,
wobei die Aktualisierungseinheit (44) ausgelegt ist zum: Aktualisieren eines in dem Fahrzeug gespeicherten Fahrzeugparameters in Antwort auf die Einstellungstätigkeit,
wobei die Beantwortungseinheit (45) ausgelegt ist zum: Beantworten, basierend auf dem Fahrzeugparameter, das aktualisiert wurde, einer Anweisung zum Steuern des Fahrzeugs,
wobei die Aufforderungseinheit (42) ausgelegt ist zum:
Übertragen, auf die Anzeige über die Kommunikationsverbindung, des anpassbaren Fahrzeugparameters und eines Parameterwerts des anpassbaren Fahrzeugparameters; und
Steuern der Anzeige zum Darstellen, in der Einstellungsschnittstelle, des anpassbaren Fahrzeugparameters und des Parameterwerts des anpassbaren Fahrzeugparameters, beide wie von der Anzeige empfangen,
wobei die Aktualisierungseinheit (44) ausgelegt ist zum:
Aktualisieren eines Parameterwerts eines in dem Fahrzeug gespeicherten Zielfahrzeugparameters entsprechend einem von der Einstellungstätigkeit eingestellten Parameterwert für den Zielfahrzeugparameter,
**dadurch gekennzeichnet, dass** die Aktualisierungseinheit (44) ausgelegt ist zum: Aktualisieren des Parameterwerts des in dem Fahrzeug gespeicherten Zielfahrzeugparameters entsprechend dem von der Einstellungstätigkeit festgelegten Parameterwert für den Zielfahrzeugparameter in einem ungesperrten Zustand als Antwort auf das Detektieren von Fahrzeugparametern des Fahrzeugs, die einen gesperrten Fahrzeugparameter umfassen,
und dadurch, dass die Aktualisierungseinheit (44) ausgelegt ist zum: Aktualisieren des Parameterwerts des in dem Fahrzeug gespeicherten Zielfahrzeugparameters entsprechend dem durch die Einstellungstätigkeit eingestellten Parameterwert für den Zielfahrzeugparameter, der gesperrt war, als Antwort auf den gesperrten Fahrzeugparameter, der auf den ungesperrten Zustand geschaltet wird.

7. Vorrichtung nach Anspruch 6, wobei die Aufforderungseinheit (42) ausgelegt ist zum:
Steuern der Anzeige zum Darstellen des gesperrten Fahrzeugparameters und eines ungesperrten Fahrzeugparameters sowie eines Parameterwerts des gesperrten Fahrzeugparameters und eines Parameterwerts des ungesperrten Fahrzeugparameters in der Einstellungsschnittstelle als Antwort auf das Detektieren der Fahrzeugparameter des Fahrzeugs, die einen den gesperrten Fahrzeugparameter umfassen,
wobei der Parameterwert des gesperrten Fahrzeugparameters nicht anpassbar ist.

8. Vorrichtung nach Anspruch 6,
wobei die Aufforderungseinheit (42) ausgelegt ist zum:
Bestimmen von anpassbaren Fahrzeugmodi des Fahrzeugs basierend auf dem anpassbaren Fahrzeugparameter des Fahrzeugs, wobei jeder der anpassbaren Fahrzeugmodi wenigstens einem der anpassbaren Fahrzeugparameter und einem Parameterwert des wenigstens einen anpassbaren Fahrzeugparameters entspricht;
Übertragen der anpassbaren Fahrzeugmodi auf die Anzeige über die Kommunikationsverbindung; und
Steuern der Anzeige in der Einstellungsschnittstelle zum Darstellen der anpassbaren Fahrzeugmodi, wie von der Anzeige empfangen,
wobei die Aktualisierungseinheit (44) ausgelegt ist zum:
Detektieren eines Zielfahrzeugmodus, ausgewählt durch die Einstellungstätigkeit aus den anpassbaren Fahrzeugmodi; und
Aktualisieren, basierend auf wenigstens einem der anpassbaren Fahrzeugparameter und einem Parameterwert von dem wenigstens einen der anpassbaren Fahrzeugparameter entsprechend dem Zielfahrzeugmodus, eines Parameterwerts eines entsprechenden in dem Fahrzeug gespeicherten Fahrzeugparameters.

9. Vorrichtung nach Anspruch 6,
wobei der anpassbare Fahrzeugparameter des Fahrzeugs ein Elektroenergie-Aufbereitungsverhältnis des Fahrzeugs umfasst,
wobei die Beantwortungseinheit (45) ausgelegt ist zum:
Aufbereiten von Energie gemäß dem Elektroenergie-Aufbereitungsverhältnis als Antwort auf einen Zustand des Fahrzeugs nach dem Beantworten der Anweisung zum Steuern des Fahrzeugs unter Einhaltung einer vorher eingestellten Bedingung.

10. Fahrzeug, ausgestattet mit der Vorrichtung nach einem der Ansprüche 6 bis 9.

11. Speichermedium, darauf speichernd ein computerausführbares Programm, das betrieben wird, um das Verfahren nach einem der Ansprüche 1 bis 5 auszuführen.

## Revendications

1. Procédé de commande d'un véhicule, comprenant :
la détection d'un paramètre de véhicule ajustable du véhicule (101) ;
la demande à l'affichage, sur la base du paramètre de véhicule ajustable du véhicule et par l'intermédiaire d'une connexion de communication avec un affichage, de présenter une interface de réglage (102) ;
l'acquisition, par l'intermédiaire de la connexion de communication avec l'affichage, d'une opération de réglage sur l'interface de réglage au niveau de l'affichage (103) ;
en réponse à l'opération de réglage, la mise à jour d'un paramètre de véhicule mémorisé au niveau du véhicule (104) ; et
la réponse, sur la base du paramètre de véhicule qui a été mis à jour, à une instruction pour commander le véhicule (105),
dans lequel la demande à l'affichage, sur la base du paramètre de véhicule ajustable du véhicule et par l'intermédiaire d'une connexion de communication avec un affichage, de présenter une interface de réglage comprend :
la transmission, à destination de l'affichage par l'intermédiaire de la connexion de communication, du paramètre de véhicule ajustable et d'une valeur de paramètre du paramètre de véhicule ajustable ; et
la commande à l'affichage de présenter, dans l'interface de réglage, le paramètre de véhicule ajustable et la valeur de paramètre du paramètre de véhicule ajustable, tous les deux tels que reçus par l'affichage,
dans lequel la mise à jour d'un paramètre de véhicule mémorisé au niveau du véhicule en réponse à l'opération de réglage comprend :
la mise à jour d'une valeur de paramètre d'un paramètre de véhicule cible mémorisé au niveau du véhicule correspondant à une valeur de paramètre réglée par l'opération de réglage pour le paramètre de véhicule cible,
**caractérisé en ce que** la mise à jour d'une valeur de paramètre d'un paramètre de véhicule cible mémorisé au niveau du véhicule correspondant à une valeur de paramètre réglée par l'opération de réglage pour le paramètre de véhicule cible comprend :
en réponse à la détection de paramètres de véhicule du véhicule comprenant un paramètre de véhicule verrouillé, la mise à jour de la valeur de paramètre du paramètre de véhicule cible mémorisé au niveau du véhicule correspondant à la valeur de paramètre réglée par l'opération de réglage pour le paramètre de véhicule cible dans un état déverrouillé ; et
en réponse à la commutation du paramètre de véhicule verrouillé dans l'état déverrouillé, la mise à jour de la valeur de paramètre du paramètre de véhicule cible mémorisé au niveau du véhicule correspondant à la valeur de paramètre réglée par l'opération de réglage pour le paramètre de véhicule cible qui était verrouillé.

2. Procédé selon la revendication 1, dans lequel la commande à l'affichage de présenter, dans l'interface de réglage, le paramètre de véhicule ajustable et la valeur de paramètre du paramètre de véhicule ajustable, tous les deux tels que reçus par l'affichage, comprend :
en réponse à la détection des paramètres de véhicule du véhicule comprenant le paramètre de véhicule verrouillé, la commande à l'affichage de présenter, dans l'interface de réglage, le paramètre de véhicule verrouillé et un paramètre de véhicule déverrouillé, ainsi qu'une valeur de paramètre du paramètre de véhicule verrouillé et une valeur de paramètre du paramètre de véhicule déverrouillé,
dans lequel la valeur de paramètre du paramètre de véhicule verrouillé n'est pas ajustable.

3. Procédé selon la revendication 1,
dans lequel la demande à l'affichage, sur la base du paramètre de véhicule ajustable du véhicule et par l'intermédiaire d'une connexion de communication avec un affichage, de présenter une interface de réglage comprend :
la détermination de modes de véhicule ajustables du véhicule sur la base du paramètre de véhicule ajustable du véhicule, chacun des modes de véhicule ajustables correspondant à au moins l'un du paramètre de véhicule ajustable et d'une valeur de paramètre de l'au moins un du paramètre de véhicule ajustable ;
la transmission, à destination de l'affichage par l'intermédiaire de la connexion de communication, des modes de véhicule ajustables ; et
la commande à l'affichage de présenter, dans l'interface de réglage, les modes de véhicule ajustables tels que reçus par l'affichage,
dans lequel la mise à jour d'un paramètre de véhicule mémorisé au niveau du véhicule en réponse à l'opération de réglage comprend :
la détection d'un mode de véhicule cible sélectionné par l'opération de réglage parmi les modes de véhicule ajustables ; et
la mise à jour, sur la base d'au moins l'un du paramètre de véhicule ajustable et d'une valeur de paramètre de l'au moins un du paramètre de véhicule ajustable correspondant au mode de véhicule cible, d'une valeur de paramètre d'un paramètre de véhicule correspondant mémorisé au niveau du véhicule.

4. Procédé selon la revendication 3, dans lequel la détermination de modes de véhicule ajustables du véhicule sur la base du paramètre de véhicule ajustable du véhicule comprend :
la détermination, sur la base d'un type du paramètre de véhicule ajustable et d'une plage de valeurs de paramètre autorisées pour le paramètre de véhicule ajustable, d'un mode de véhicule correspondant à une valeur de paramètre d'un paramètre de véhicule d'un type dans un espace de valeur.

5. Procédé selon la revendication 1,
dans lequel le paramètre de véhicule ajustable du véhicule comprend une proportion de recyclage d'énergie électrique du véhicule,
dans lequel la réponse, sur la base du paramètre de véhicule qui a été mis à jour, à une instruction pour commander le véhicule comprend :
en réponse à un état du véhicule après la réponse à l'instruction pour commander le véhicule remplissant une condition préréglée, le recyclage d'énergie en fonction de la proportion de recyclage d'énergie électrique.

6. Dispositif (40) de commande d'un véhicule, comprenant une unité de détection (41), une unité de demande (42), une unité d'acquisition (43), une unité de mise à jour (44), et une unité de réponse (45),
dans lequel l'unité de détection (41) est agencée pour : la détection d'un paramètre de véhicule ajustable du véhicule,
dans lequel l'unité de demande (42) est agencée pour : la demande à l'affichage, sur la base du paramètre de véhicule ajustable du véhicule et par l'intermédiaire d'une connexion de communication avec un affichage, de présenter une interface de réglage,
dans lequel l'unité d'acquisition (43) est agencée pour : l'acquisition, par l'intermédiaire de la connexion de communication avec l'affichage, d'une opération de réglage sur l'interface de réglage au niveau de l'affichage,
dans lequel l'unité de mise à jour (44) est agencée pour : en réponse à l'opération de réglage, la mise à jour d'un paramètre de véhicule mémorisé au niveau du véhicule,
dans lequel l'unité de réponse (45) est agencée pour : la réponse, sur la base du paramètre de véhicule qui a été mis à jour, à une instruction pour commander le véhicule,
dans lequel l'unité de demande (42) est agencée pour :
la transmission, à destination de l'affichage par l'intermédiaire de la connexion de communication, du paramètre de véhicule ajustable et d'une valeur de paramètre du paramètre de véhicule ajustable ; et
la commande à l'affichage de présenter, dans l'interface de réglage, le paramètre de véhicule ajustable et la valeur de paramètre du paramètre de véhicule ajustable, tous les deux tels que reçus par l'affichage,
dans lequel l'unité de mise à jour (44) est agencée pour :
la mise à jour d'une valeur de paramètre d'un paramètre de véhicule cible mémorisé au niveau du véhicule correspondant à une valeur de paramètre réglée par l'opération de réglage pour le paramètre de véhicule cible,
**caractérisé en ce que** l'unité de mise à jour (44) est agencée pour : en réponse à la détection de paramètres de véhicule du véhicule comprenant un paramètre de véhicule verrouillé, la mise à jour de la valeur de paramètre du paramètre de véhicule cible mémorisé au niveau du véhicule correspondant à la valeur de paramètre réglée par l'opération de réglage pour le paramètre de véhicule cible dans un état déverrouillé,
et **en ce que** l'unité de mise à jour (44) est agencée pour : en réponse à la commutation du paramètre de véhicule verrouillé dans l'état déverrouillé, la mise à jour de la valeur de paramètre du paramètre de véhicule cible mémorisé au niveau du véhicule correspondant à la valeur de paramètre réglée par l'opération de réglage pour le paramètre de véhicule cible qui était verrouillé.

7. Dispositif selon la revendication 6, dans lequel l'unité de demande (42) est agencée pour :
en réponse à la détection des paramètres de véhicule du véhicule comprenant le paramètre de véhicule verrouillé, la commande à l'affichage de présenter, dans l'interface de réglage, le paramètre de véhicule verrouillé et un paramètre de véhicule déverrouillé, ainsi qu'une valeur de paramètre du paramètre de véhicule verrouillé et une valeur de paramètre du paramètre de véhicule déverrouillé,
dans lequel la valeur de paramètre du paramètre de véhicule verrouillé n'est pas ajustable.

8. Dispositif selon la revendication 6,
dans lequel l'unité de demande (42) est agencée pour :
la détermination de modes de véhicule ajustables du véhicule sur la base du paramètre de véhicule ajustable du véhicule, chacun des modes de véhicule ajustables correspondant à au moins l'un du paramètre de véhicule ajustable et d'une valeur de paramètre de l'au moins un du paramètre de véhicule ajustable ;
la transmission, à destination de l'affichage par l'intermédiaire de la connexion de communication, des modes de véhicule ajustables ; et
la commande à l'affichage de présenter, dans l'interface de réglage, les modes de véhicule ajustables tels que reçus par l'affichage,
dans lequel l'unité de mise à jour (44) est agencée pour :
la détection d'un mode de véhicule cible sélectionné par l'opération de réglage parmi les modes de véhicule ajustables ; et
la mise à jour, sur la base d'au moins l'un du paramètre de véhicule ajustable et d'une valeur de paramètre de l'au moins un du paramètre de véhicule ajustable correspondant au mode de véhicule cible, d'une valeur de paramètre d'un paramètre de véhicule correspondant mémorisé au niveau du véhicule.

9. Dispositif selon la revendication 6,
dans lequel le paramètre de véhicule ajustable du véhicule comprend une proportion de recyclage d'énergie électrique du véhicule,
dans lequel l'unité de réponse (45) est agencée pour :
en réponse à un état du véhicule après la réponse à l'instruction pour commander le véhicule remplissant une condition préréglée, le recyclage d'énergie en fonction de la proportion de recyclage d'énergie électrique.

10. Véhicule doté du dispositif selon l'une quelconque des revendications 6 à 9.

11. Support de mémorisation sur lequel est mémorisé un programme exécutable par ordinateur destiné à être lancé pour exécuter le procédé selon l'une quelconque des revendications 1 à 5.
